# EUROPÄISCHE PATENTSCHRIFT

(11) **EP 3 727 782 B1**
(45) Veröffentlichungstag und Bekanntmachung des Hinweises auf die Patenterteilung: **24.04.2024**
(21) Anmeldenummer: 18789056.1
(22) Anmeldetag: 15.10.2018
(51) Int. Cl.: B29C 35/02, B29C 33/76, B29D 23/00

(54) **VERFAHREN ZUR HERSTELLUNG EINES GEFORMTEN HOHLKÖRPERS UND VORRICHTUNG ZUR DURCHFÜHRUNG DES VERFAHRENS**
METHOD FOR PRODUCING A MOLDED HOLLOW BODY, AND DEVICE FOR CARRYING OUT THE METHOD
PROCÉDÉ DE FABRICATION D'UN CORPS CREUX MOULÉ ET DISPOSITIF POUR LA MISE EN OEUVRE DUDIT PROCÉDÉ

(30) Priorität: 20.12.2017 DE 102017223310
(43) Veröffentlichungstag der Anmeldung: 28.10.2020
(73) Patentinhaber: ContiTech Techno-Chemie GmbH, 61184 Karben (DE)
(72) Erfinder: KREIDNER, Harald, 34346 Hann. Münden (DE); BRILL, Hartmut, 37242 Bad Sooden-Allendorf (DE)
(74) Vertreter: Continental Corporation
(86) Internationale Anmeldenummer: PCT/EP2018/077987
(87) Internationale Veröffentlichungsnummer: WO 2019/120676

(56) Entgegenhaltungen:
- DE-A1- 10 354 764
- GB-A- 761 212
- GB-A- 892 654
- GB-A- 1 167 146

## Beschreibung

Die Erfindung betrifft ein Verfahren zur Herstellung eines geformten Hohlkörpers aus elastomerem Material.

Hohlkörper, die neben ihrer Basisform weitere Formelemente aufweisen, werden häufig mittels einer Vulkanisationsvorrichtung geformt. Dabei weist ein Vulkanisationswerkzeug die Komplementärform des Fertigteils auf. Ein Rohling, beispielsweise ein extrudierter Schlauchendabschnitt, kann in dem Vulkanisationswerkzeug durch Beaufschlagung mit Druckluft an die Wandung des Werkzeugs gepresst und vulkanisiert werden. Auf diese Weise sind beispielsweise elastische Schläuche mit ringförmigen Wulsten herstellbar.

Mit einem derartigen Verfahren kann jedoch pro Vulkanisationsvorgang nur jeweils eine begrenzte Anzahl von Teilen hergestellt werden, da jedes Teil einen Innendruck erzeugt, der von der jeweiligen Vulkanisationspresse aufzunehmen ist. Daher entscheidet die Schließkraft der Presse über die Menge der zeitgleich herstellbaren Teile, was die Ausbringung einschränken kann.

GB 1 167 146 A offenbart ein Verfahren gemäß dem Oberbegriff des Anspruchs 1 und eine Vorrichtung gemäß dem Oberbegriff des Anspruchs 4.

Der Erfindung lag daher die Aufgabe zugrunde, ein Verfahren zur Herstellung der genannten Hohlkörper zu schaffen, das eine höhere Ausbringung ermöglicht.

Diese Aufgabe wird durch ein Verfahren gemäß Anspruch 1 gelöst.

Dieses Verfahren erlaubt es, mit einem Vulkanisationsprozess mehrere Hohlkörper auf einmal zu fertigen.

In einer Weiterbildung der Erfindung weist das Verfahren mindestens folgenden weiteren Arbeitsschritt auf, nämlich
c₁) Druckbeaufschlagung der Luftkammern der Dorne mit einem vorbestimmten Innendruck

Die Druckbeaufschlagung kann bei der Abstimmung der Prozesskräfte und der durch die luftdurchlässigen Bereiche der Dome strömende Luftmenge hilfreich sein.

In einer Weiterbildung der Erfindung weist das Verfahren mindestens folgenden weiteren Arbeitsschritt auf, nämlich
es) Druckanpassung zwischen den Luftkammern der Dome und dem Autoklaven über einstellbare, in den Dornen angeordnete Druckausgleichselemente.

Auf diese Weise lassen sich die Prozessparameter, beispielsweise Viskosität des elastomeren Materials, und Luftdurchlässigkeit der Wandungsbereiche der Dome oder die auftretenden Prozesskräfte auch in Abhängigkeit von der Prozesstemperatur gut berücksichtigen und aufeinander abstimmen.

In einer Weiterbildung der Erfindung weist das Verfahren mindestens folgenden weiteren Arbeitsschritt auf, nämlich
f₁) Druckbeaufschlagung der Luftkammern der Dorne, dadurch Durchtritt von Luft durch die luftdurchlässigen Wandungsbereiche aus den Luftkammern zwischen die Dorne und die fertig vulkanisierten Hohlkörper, dabei Bildung eines Luftpolsters zwischen Dornen und Hohlkörpern.

Diese Luftpolster können das Abziehen der Hohlkörper vom Dorn erleichtern.

Die Erfindung betrifft weiter eine Vorrichtung zur Durchführung des oben erläuterten Verfahrens.

Der Erfindung lag dabei die Aufgabe zugrunde, eine Vorrichtung zu schaffen, mit der das eingangs erläuterte Verfahren besonders einfach durchzuführen ist.

Diese Aufgabe wird dadurch gelöst, dass die Vorrichtung gemäß Anspruch 4.

Derartige Dome haben den Vorteil, dass sie in einem Autoklaven einsetzbar sind, wobei mehrere Dome gleichzeitig in den Autoklaven einbringbar sind.

Durch die luftdurchlässige Wandung ist Luft, die beim Aufstecken des Rohlings zwischen Dorn und Wand des Rohlings eingeschlossen wird, bei Druckbeaufschlagung des Autoklaven in die korrespondierenden Luftkammern der Dorne pressbar, sodass die Rohlinge an der Komplementärform des jeweiligen Dornes formschlüssig anliegen. Da die fertigen Hohlkörper aus Elastomermaterial sind, lassen sich diese bei vollendeter Vulkanisation und Druckentlastung des Autoklaven vom Dorn wieder abziehen.

In einer Weiterbildung der Erfindung sind die Luftkammern der Dome mit Druckluft beaufschlagbar.

Nach Abschluss der Vulkanisation und Druckentlastung der Autoklaven kann so Luft durch die entsprechenden luftdurchlässigen Bereiche zwischen den Hohlkörper und den Dorn gepresst werden, wodurch ein Luftpolster zwischen dem Hohlkörper und dem Dorn bildbar ist, so das ein Abziehen der Hohlkörper vom Dorn erleichtert ist.

In einer Weiterbildung der Erfindung weisen die Luftkammern der Dome einstellbare Druckausgleichselemente auf.

Mittels dieser Druckausgleichselemente ist der Differenzdruck zwischen dem Innendruck in den Luftkammern der Dome und dem Autoklavendruck einstellbar.

Auf diese Weise ist das Anlegen der Rohlingswand an die Dorne in Abhängigkeit von den sich gegebenenfalls ändernden Prozessparametern einstellbar. Es lässt sich beispielsweise vermeiden, dass das elastomere Material, welches sich bei Beaufschlagung mit Autoklavendruck und Hitze in seiner Viskosität ändert, aufgrund der geregelten Kraft, die auf den Schlauch wirkt, durch die luftdurchlässigen Bereiche der Domwandung in das Innere der Dorne saugbar ist und dabei die luftdurchlässigen Bereiche der Dome verstopft.

Gemäß der Erfindung ist in jedem Bereichen mit luftdurchlässiger Wandung mindestens ein Ventil angeordnet, das einen Luftdurchtritt von Außen in das Innere der korrespodierenden Luftkammer und aus der korrespondierenden Luftkammer nach Außen zulässt.

Die Luftdurchlässigkeit in den entsprechenden Bereichen wird durch die Ventile gewährleistet. Ventile sind als fertige Bauteile in einer großen Vielfalt erhältlich, so dass die Bereiche mit luftdurchlässiger Wandung genau den jeweiligen Bedürfnissen anpassbar sind. Außerdem sind die Ventile bei Bedarf relativ leicht austauschbar.

In einer Weiterbildung der Erfindung weist das jeweils mindestens eine Ventil einen beweglichen Ventileinsatz mit einem Schaft und einem Teller auf, wobei der Ventileinsatz in eine geschlossene Stellung bewegbar ist durch Druck auf die Seite des Tellers, die dem aufgesteckten Schlauchrohling zugewandt ist und umgekehrt der Ventileinsatz in die offene Stellung bewegbar ist, wenn ein Luftdruck von der korrespondierenden Luftkammer aus auf den Teller wirkt und der fertig vulkanisierte Schlauch von dem Dorn abgezogen wird, wobei das Öffnen des Ventils durch eine Feder unterstützt ist, wobei die Beweglichkeit des Ventileinsatzes durch einen an dem Teller abgewandten Ende des Ventiles angeordneten Anschlag begrenzt ist, der die Bewegung des Ventileinsatzes in die Öffnungsstellung auf einen vorbestimmten Weg begrenzt, wobei der Anschlag und mindestens teilweise der Schaft des dem Teller abgewandten Endes des Ventileinsatzes einen Schlitz aufweist, durch den einerseits der Anschlag radial zusammendrückbar ist und andererseits Luft in das dem Teller abgewandten Ende des Ventileinsatzes strömen kann. Ein derartiges Ventil ist in der EP 0 774 333 B1 als Entlüftungsventil für eine Reifenvulkanisationsform offenbart. Andere Anwendungsfälle sind in der genannten Schrift nicht offenbart. Auf den Wortlaut der genannten Schrift, insbesondere Anspruch 1 und 4 wird hiermit ausdrücklich Bezug genommen. Die Anordnung des Ventils in der Reifenvulkanisationsform ist dabei der Anordnung in der Wandung des Dornes entgegengesetzt, so dass die zwischen dem Schlauchrohling und dem Dorn eingeschlossene Luft in die korrespondierende Luftkammer des Dornes pressbar ist und das Ventil erst beim Auftreffen des Schlauchrohlings auf den Teller des Ventils schließbar ist, so dass ein Eindringen von unvulkanisiertem Elastomermaterial in das Ventil verhinderbar ist. Durch den Schlitz am Anschlagende des Ventileinsatzes ist nach der Vulkanisation dann Luft aus der Luftkammer des Dornes in das Ventil pressbar, was beim Abziehen des fertigen Schlauches das Ventil zum Öffnen bringt und damit das entstehende Luftpolster zwischen dem Schlauch und dem Dorn das Abziehen des Schlauches erleichtert.

Anhand der Zeichnung wird nachstehend ein Ausführungsbeispiel der Erfindung näher erläutert.

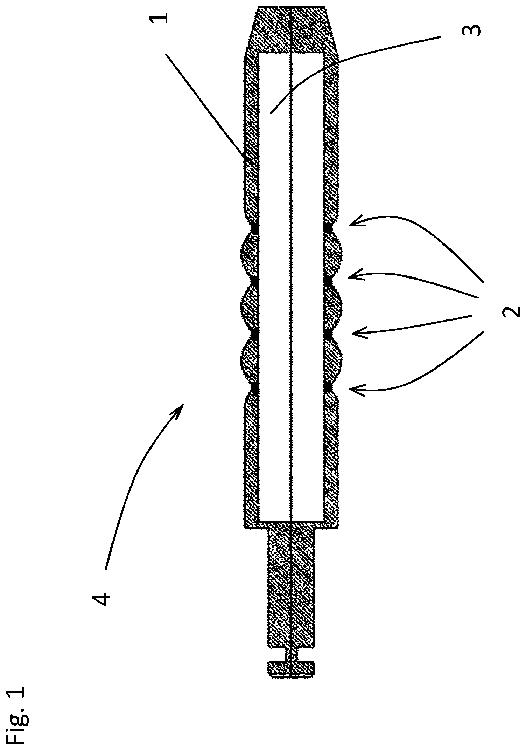

Die Fig. 1 zeigt einen erfindungsgemäßen Dorn 1 mit vier ringförmig umlaufenden Bereichen 2.

Der Dorn 1 weist weiter eine Luftkammer 3 auf. Die Luftkammer 3 enthält zunächst Luft mit Atmosphärendruck, wobei durch die luftdurchlässigen Bereiche 2 ein Luftaustausch zwischen der Luftkammer 3 und der Umgebung möglich ist.

Der Dorn 1 weist weiterhin eine Formkontur 4 auf.

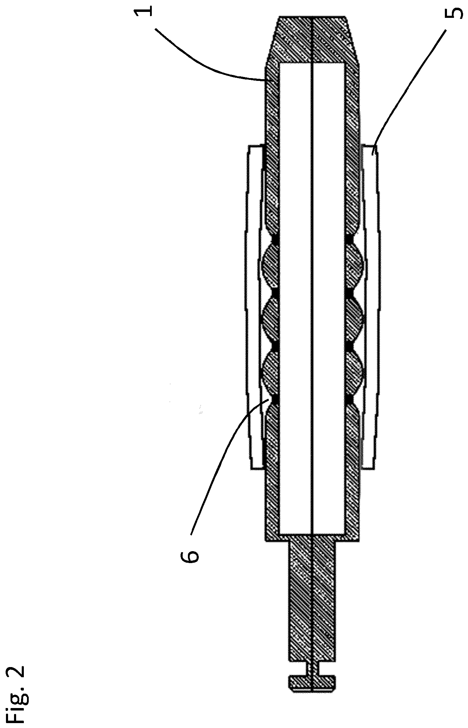

In Figur 2 ist der Dorn 1 mit einem aufgesteckten Schlauchrohling 5 dargestellt. Der Dorn 1 mit Rohling 5 ist in einem hier nicht dargestellten Autoklaven angeordnet. Der Schlauchrohling 5 liegt über der Formkontur 4 des Dorns 1 nicht formschlüssig an, da der Innendruck der Luftkammer 3 und der Druck im nicht gezeigten Autoklaven in dem gezeigten Zustand noch gleich sind. Dadurch ist ein Luftpolster 6 zwischen dem Dorn 1 und dem Rohling 5 eingeschlossen.

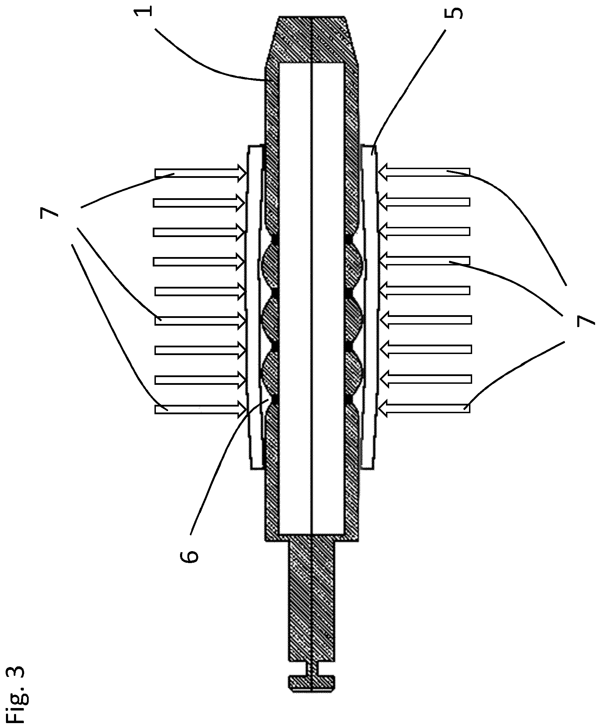

In Figur 3 ist der Dorn 1 mit Rohling 5 und Formkontur 4 in einem Zustand gezeigt, in dem ein durch den nicht gezeigten Autoklaven erzeugter Vulkanisationsdruck, hier durch Pfeile 7 symbolisiert, auf den Rohling 5 einwirkt. Dieser Vulkanisationsdruck 7 soll bewirken, dass der Rohling 5 an die Formkontur 4 des Dorns 1 angepresst wird.

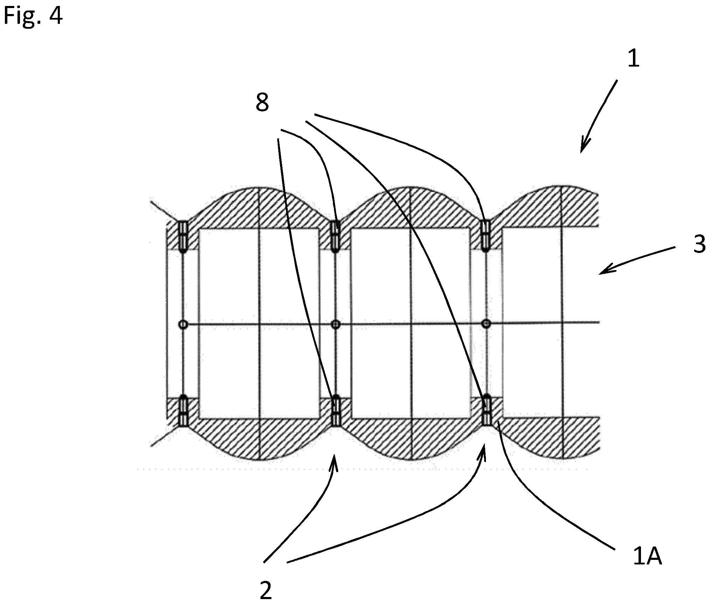

In Fig 4 ist eine Ausschnittvergrößerung des Dornes 1 in einem Teilschnitt gezeigt. In den Bereichen 2 sind umlaufend mehrere, hier jeweils nur zwei sichtbare Ventile 8 in der Wandung 1A des Dornes 1 angeordnet. Die Ventile 8 stellen eine luftführende Verbindung zwischen der Luftkammer 3 des Dornes 1 und der Umgebung sicher.

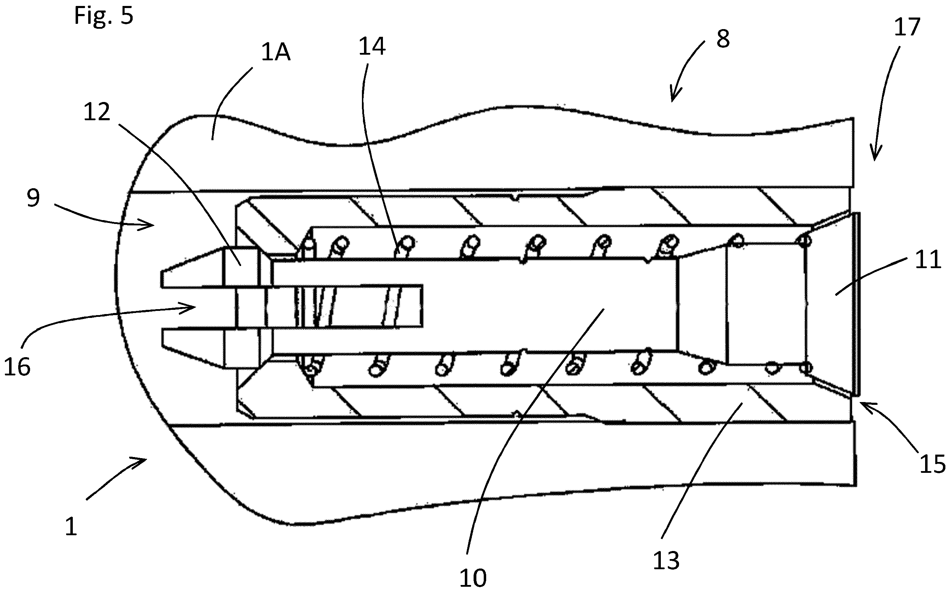

In der Fig. 5 ist ein Ventil 8 in einer Schnittdarstellung in geöffneter Einbaulage gezeigt. Das Ventil 8 ist in der Wandung 1A des Dorns 1 in einer Bohrung 9 angeordnet. Das Ventil 8 weist einen Ventileinsatz 10 auf. Der Ventileinsatz 10 weist einen Teller 11 und einen Anschlag 12 auf. gegen ein Ventilgehäuse 13 ist der Ventileinsatz axial beweglich gelagert, wobei er durch eine schwache Feder 14 in geöffneter Stellung gehalten ist. Durch einen Spalt 15 zwischen Ventilgehäuse 13 und Teller 11 kann Luft durch das Ventilgehäuse 13 strömen, die an einem im Anschlagende des Ventileinsatzes 10 angeordneten Schlitz 16 wieder ausströmen kann. Der Teller 11 ist der Außenwandung 17 des Dornes 1, also einem hier nicht gezeigten aufgesteckten Schlauchrohling zugewandt, während der Anschlag 12 mit Schlitz 16 der hier nicht dargestellten Luftkammer zugewandt ist.

Liegt der Schlauchrohling am Teller 11 an, wird das Ventil 8 geschlossen. Ist der Schlauchrohling fertig vulkanisiert und wird abgezogen, ist Luft aus der Luftkammer durch den Schlitz16 in das Ventilgehäuse 13 pressbar, was mit Unterstützung der Feder 14 für ein Öffnen des Ventils 8 sorgt. Dadurch ist ein Luftpolster zwischen dem Dorn 1 und dem nicht gezeigten Schlauch erzeugbar, was das Abziehen erleichtert.

### Bezugszeichenliste

### (Teil der Beschreibung)

- 1: Dorn
- 1A: Wandung des Dornes 1
- 2: luftdurchlässige Bereiche des Dorns 1
- 3: Luftkammer
- 4: Formkontur des Dorns 1
- 5: Schlauchrohling
- 6: Luftpolster
- 7: Vulkanisationsdruck
- 8: Ventil
- 9: Bohrung in der Wandung 1A
- 10: Ventileinsatz
- 11: Teller des Ventileinsatzes 10
- 12: Anschlag des Ventileinsatzes 10
- 13: Ventilgehäuse
- 14: Feder
- 15: Spalt zwischen Teller 11 und Ventilgehäuse 13
- 16: Schlitz im Anschlag 12

## Patentansprüche

1. Verfahren zur Herstellung von geformten Hohlkörpern (8) aus elastomerem Material, wobei das Verfahren mindestens folgende Arbeitsschritte aufweist, nämlich
a) Aufschieben eines vorgefertigten Rohlings (5) auf einen Dorn (1), wobei der Dorn (1) mindestens einen Bereich mit einer Wandung (2) aufweist, die luftdurchlässig ausgebildet ist, und der Dorn (1) mindestens eine Luftkammer (3) aufweist, die mit dem mindestens einen Bereich luftdurchlässiger Wandung (2) in Wirkverbindung steht,
b) Einbringen des Dorns (1) mit aufgeschobenem Rohling (5) in einen an sich bekannten Autoklaven,
c₁) Beaufschlagung des Autoklaven mit Druck und Temperatur, wobei Luft (6), die zwischen dem Rohling (5) und dem Dorn (1) eingeschlossen ist, durch die Bereiche luftduchlässiger Wandung (2) in die jeweilige Luftkammer (3) gepresst wird, dabei Ausvulkanisation der Rohlinge (5),
d) Entlastung des Autoklaven und Abkühlen
e) Entnehmen der Dorne (1) mit fertig vulkanisierten und ausgeformten Hohlkörpern (8)
f₂) Abziehen der Hohlkörper (8) von den Dornen (1),
**dadurch gekennzeichnet, dass** in dem mindestens einen Bereich mit luftdurchlässiger Wandung (2) mindestens ein Ventil (8) angeordnet ist, das einen Luftdurchtritt von außen in das Innere der korrespodierenden Luftkammer (3) und aus der korrespondierenden Luftkammer (3) nach außen zulässt.

2. Verfahren nach Anspruch 1, **dadurch gekennzeichnet, dass** das Verfahren mindestens folgenden weiteren Arbeitsschritt aufweist, nämlich
c₂) Druckanpassung zwischen der mindesten einen Luftkammer (3) des mindestens einen Dornes (1) und dem Autoklaven über einstellbare, in dem mindestens einen Dorn (1) angeordnete Druckausgleichselemente.

3. Verfahren nach Anspruch 1 oder 2, **dadurch gekennzeichnet, dass** das Verfahren mindestens folgenden weiteren Arbeitsschritt aufweist, nämlich
f₁) Druckbeaufschlagung der Luftkammern (3) der Dorne (1), dadurch Durchtritt von Luft durch die luftdurchlässigen Wandungsbereiche (2) aus den Luftkammern (3) zwischen die Dorne (1) und die fertig vulkanisierten Hohlkörper (8), dabei Bildung eines Luftpolsters zwischen Dornen (1) und Hohlkörpern (8).

4. Vorrichtung zur Herstellung von geformten Hohlkörpern (8) aus elastomerem Material, wobei
die Vorrichtung mindestens einen Dorn (1) aufweist, auf den ein im wesentlichen schlauchförmig ausgebildetes Rohteil (5) aufschiebbar ist und der mindestens einen Bereich mit einer luftdurchlässigen Wandung (2) und mindestens eine Luftkammer (3) aufweist, wobei der mindestens eine Bereich mit luftdurchlässiger Wandung (2) mit der mindestens einen Luftkammer (3) in Wirkverbindung steht wobei der mindestens eine Dorn (1) die Komplementärform (4) zur vorbestimmten Endgeometrie des Hohlkörpers (8) aufweist,
**dadurch gekennzeichnet, dass** in dem mindestens einen Bereich mit luftdurchlässiger Wandung (2) mindestens ein Ventil (8) angeordnet ist, das einen Luftdurchtritt von außen in das Innere der korrespodierenden Luftkammer (3) und aus der korrespondierenden Luftkammer (3) nach außen zulässt.

5. Vorrichtung nach Anspruch 4, **dadurch gekennzeichnet, dass** die mindestens eine Luftkammer (3) des mindestens einen Dornes (1) mit Druckluft beaufschlagbar ist.

6. Vorrichtung nach Anspruch 4 oder 5, **dadurch gekennzeichnet, dass** die mindestens eine Luftkammer (3) des mindestens einen Dornes (1) einstellbare Druckausgleichselemente aufweist.

7. Vorrichtung nach einem der vorstehenden Ansprüche 4 bis 6, **dadurch gekennzeichnet, dass** das jeweils mindestens eine Ventil (8) einen beweglichen Ventileinsatz (10) mit einem Schaft und einem Teller (11) aufweist, wobei der Ventileinsatz (10) in eine geschlossene Stellung bewegbar ist durch Druck auf die Seite des Tellers (11), die dem aufgesteckten Schlauchrohling (5) zugewandt ist und umgekehrt der Ventileinsatz (10) in die offene Stellung bewegbar ist, wenn ein Luftdruck von der korrespondierenden Luftkammer (3) aus auf den Teller (11) wirkt und ein fertig vulkanisierter Hohlkörper (8) von dem Dorn (1) abgezogen wird, wobei das Öffnen des Ventils (8) durch eine Feder (14) unterstützt ist, wobei die Beweglichkeit des Ventileinsatzes (10) durch einen an dem Teller (11) abgewandten Ende (12) des Ventiles (8) angeordneten Anschlag (12) begrenzt ist, der die Bewegung des Ventileinsatzes (10) in die Öffnungsstellung auf einen vorbestimmten Weg begrenzt, wobei der Anschlag (12) und mindestens teilweise der Schaft des dem Teller (11) abgewandten Endes des Ventileinsatzes (10) einen Schlitz (16) aufweist, durch den einerseits der Anschlag (12) radial zusammendrückbar ist und andererseits Luft in das dem Teller (11) abgewandten Ende des Ventileinsatzes (10) strömen kann.

## Claims

1. Method for producing moulded hollow bodies (8) from elastomeric material, wherein the method has at least the following working steps, specifically
a) pushing a prefabricated blank (5) onto a mandrel (1), wherein the mandrel (1) has at least one region with a wall (2) that is designed to be air-permeable, and the mandrel (1) has at least one air chamber (3) which is operatively connected to the at least one region with an air-permeable wall (2);
b) incorporating the mandrel (1) with the blank (5) pushed onto the former into an autoclave known per se;
c₁) impinging the autoclave with pressure and temperature, wherein air (6) enclosed between the blank (5) and the mandrel (1) is forced through the regions with an air-permeable wall (2) into the respective air chamber (3), the blanks (5) being vulcanized in the process;
d) destressing the autoclave and cooling;
e) retrieving the mandrels (1) with completely vulcanized and moulded hollow bodies (8);
f₂) removing the hollow bodies (8) from the mandrels (1),
**characterized in that** at least one valve (8) which permits passage of air from the outside into the interior of the corresponding air chamber (3) and from the corresponding air chamber (3) to the outside is disposed in the at least one region with an air-permeable wall (2).

2. Method according to Claim 1, **characterized in that** the method has at least the following further working step, specifically
c₂) matching the pressure between the at least one air chamber (3) of the at least one mandrel (1) and the autoclave by way of adjustable pressure equalization elements disposed in the at least one mandrel (1).

3. Method according to Claim 2, **characterized in that** the method has at least the following further working step, specifically
f₁) pressurizing the air chambers (3) of the mandrels (1), resulting in the passage of air from the air chambers (3) through the air-permeable wall regions (2) between the mandrels (1) and the completely vulcanized hollow bodies (8), while forming an air cushion between the mandrels (1) and the hollow bodies (8).

4. Device for producing moulded hollow bodies (8) from elastomeric material, wherein the device has at least one mandrel (1) onto which a substantially tubular blank (5) is able to be pushed and which has at least one region with an air-permeable wall (2) and at least one air chamber (3), wherein the at least one region with an air-permeable wall (2) is operatively connected to the at least one air chamber (3),
wherein the at least one mandrel (1) has the complementary shape (4) corresponding to the predetermined final geometry of the hollow body (8), **characterized in that** at least one valve (8) which permits passage of air from the outside into the interior of the corresponding air chamber (3) and from the corresponding air chamber (3) to the outside is disposed in the at least one region with an air-permeable wall (2).

5. Device according to Claim 4, **characterized in that** the at least one air chamber (3) of the at least one mandrel (1) is able to be impinged with compressed air.

6. Device according to Claim 4 or 5, **characterized in that** the at least one air chamber (3) of the at least one mandrel (1) has adjustable pressure equalization elements.

7. Device according to one of the preceding Claims 4 to 6, **characterized in that** the respective at least one valve (8) has a movable valve insert (10) having a shank and a plate (11), wherein the valve insert (10) by pressure acting on that side of the plate (11) that faces the attached tubular blank (5) is movable to a closed position and, conversely, the valve insert (10) is movable to the open position when an air pressure from the corresponding air chamber (3) acts on the plate (11) and a completely vulcanized hollow body (8) is removed from the mandrel (1), wherein the opening of the valve (8) is facilitated by a spring (14), wherein the mobility of the valve insert (10) is delimited by a detent (12) which is disposed on that end (12) of the valve (8) that faces away from the plate (11) and delimits the movement of the valve insert (10) to the open position to a predetermined travel, wherein the detent (12) and, at least in part, the shank of that end of the valve insert (10) that faces away from the plate (11) has a slot (16) by way of which the detent (12) is radially compressible, on the one hand, and air can flow into that end of the valve insert (10) that faces away from the plate (11), on the other hand.

## Revendications

1. Procédé de fabrication de corps creux façonnés (8) en matériau élastomère, le procédé présentant au moins les étapes de travail suivantes, à savoir
a) l'enfilage d'une ébauche préfabriquée (5) sur un mandrin (1), le mandrin (1) présentant au moins une zone avec une paroi (2) qui est réalisée perméable à l'air, et le mandrin (1) présentant au moins une chambre à air (3) qui est en liaison active avec l'au moins une zone de paroi (2) perméable à l'air,
b) l'introduction du mandrin (1) avec l'ébauche (5) enfilée dans un autoclave connu en soi,
c₁) la sollicitation de l'autoclave avec une pression et une température, de l'air (6) enfermé entre l'ébauche (5) et le mandrin (1) étant pressé à travers les zones de paroi perméable à l'air (2) dans la chambre à air respective (3), les ébauches (5) étant alors vulcanisées,
d) la détente de l'autoclave et le refroidissement,
e) le retrait des mandrins (1) avec des corps creux (8) complètement vulcanisés et façonnés,
f₂) l'enlèvement des corps creux (8) des mandrins (1), **caractérisé en ce que** dans l'au moins une zone à paroi perméable à l'air (2) est agencée au moins une soupape (8) qui permet un passage d'air de l'extérieur vers l'intérieur de la chambre à air correspondante (3) et de la chambre à air correspondante (3) vers l'extérieur.

2. Procédé selon la revendication 1, **caractérisé en ce que** le procédé présente au moins l'étape de travail supplémentaire suivante, à savoir
c₂) l'adaptation de la pression entre l'au moins une chambre à air (3) de l'au moins un mandrin (1) et l'autoclave par l'intermédiaire d'éléments de compensation de pression réglables agencés dans l'au moins un mandrin (1).

3. Procédé selon la revendication 1 ou 2, **caractérisé en ce que** le procédé présente au moins l'étape de travail supplémentaire suivante, à savoir
f₁) la sollicitation en pression des chambres à air (3) des mandrins (1), ce qui permet le passage d'air à travers les zones de paroi perméables à l'air (2), à partir des chambres à air (3), entre les mandrins (1) et les corps creux (8) complètement vulcanisés, avec formation d'un coussin d'air entre les mandrins (1) et les corps creux (8).

4. Dispositif pour la fabrication de corps creux façonnés (8) en matériau élastomère, le dispositif présentant au moins un mandrin (1) sur lequel peut être enfilée une pièce brute (5) réalisée essentiellement en forme de tuyau et qui présente au moins une zone avec une paroi perméable à l'air (2) et au moins une chambre à air (3), l'au moins une zone à paroi perméable à l'air (2) étant en liaison active avec l'au moins une chambre à air (3),
l'au moins
un mandrin (1) présentant la forme complémentaire (4) à la géométrie finale prédéterminée du corps creux (8), **caractérisé en ce que** dans l'au moins une zone à paroi perméable à l'air (2) est agencée au moins une soupape (8) qui permet un passage d'air de l'extérieur vers l'intérieur de la chambre à air correspondante (3) et de la chambre à air correspondante (3) vers l'extérieur.

5. Dispositif selon la revendication 4, **caractérisé en ce que** l'au moins une chambre à air (3) de l'au moins un mandrin (1) peut être sollicitée avec de l'air comprimé.

6. Dispositif selon la revendication 4 ou 5, **caractérisé en ce que** l'au moins une chambre à air (3) de l'au moins un mandrin (1) présente des éléments de compensation de pression réglables.

7. Dispositif selon l'une quelconque des revendications 4 à 6 précédentes, **caractérisé en ce que** l'au moins une soupape respective (8) présente un insert de soupape mobile (10) avec une tige et un disque (11), l'insert de soupape (10) pouvant être déplacé vers une position fermée par pression sur le côté du disque (11), qui est tourné vers l'ébauche de tuyau (5) emmanchée et, inversement, l'insert de soupape (10) pouvant être déplacé vers la position ouverte lorsqu'une pression d'air provenant de la chambre à air correspondante (3) agit sur le disque (11) et qu'un corps creux complètement vulcanisé (8) est enlevé du mandrin (1), l'ouverture de la soupape (8) étant assistée par un ressort (14), la mobilité de l'insert de soupape (10) étant limitée par une butée (12) agencée à l'extrémité (12) de la soupape (8) détournée du disque (11), qui limite le mouvement de l'insert de soupape (10) dans la position d'ouverture à une course prédéterminée, la butée (12) et au moins partiellement la tige de l'extrémité de l'insert de soupape (10) détournée du disque (11) présentant une fente (16) à travers laquelle d'une part la butée (12) peut être comprimée radialement et d'autre part de l'air peut s'écouler dans l'extrémité de l'insert de soupape (10) détournée du disque (11).
